Europäisches Patentamt

European Patent Office

Office européen des brevets

(11) Publication number: 0 217 612
A1

## (12) EUROPEAN PATENT APPLICATION

(21) Application number: 86307246.8

(22) Date of filing: 19.09.86

(51) Int. Cl.⁴: A 22 C 7/00

(30) Priority: 20.09.85 GB 8523318

(43) Date of publication of application:
08.04.87 Bulletin 87/15

(84) Designated Contracting States:
DE FR GB

(71) Applicant: Zannetos, Michael
82 Twyford Avenue
London N2(GB)

(72) Inventor: Zannetos, Michael
82 Twyford Avenue
London N2(GB)

(74) Representative: Meddle, Alan Leonard et al,
FORRESTER & BOEHMERT Widenmayerstrasse 4/I
D-8000 München 22(DE)

(54) Improvements in or relating to forming doner or shawarma kebabs.

(57) This invention relates to improvements in or relating to forming Doner or Shawarma kebabs. In particular, a machine for forming a Doner or Shawarma Kebab comprises a tubular member (1), a first pressing plate (2) receivable in one end of the tubular member (1), a second pressing plate (3) removably mountable to the tubular member (1) to close the other end thereof, one of the first and second pressing plates being arranged to receive a support for a Doner or Shawarma kebab and hydraulically operated means (5) for moving the first pressing plate (2) axially inwardly of the tubular member. In use of the machine, the first pressing plate (2) is mounted on an actuating member (8) of the moving means (5) which extends from a base (4) of a machine and the tubular member (1) is mounted on the base so that the first pressing plate is slidable therein. A Doner or Shawarma kebab support (19) is then mounted within the tubular member on the first pressing plate and the tubular member (1) is filled with sliced or minced meat (25). The second pressing plate (3) is then secured in place at the other end of the tubular member (1) and the moving means is actuated by actuating means (6,7) to move the first pressing plate (2) axially inwardly to press the meat to form a Doner or Shawarma kebab. Actuation of the moving means (5) is then stopped and the second pressing plate (3) is removed. In order to remove the Doner or Shawarma kebab from the tubular member, the moving means is reactuated so that the Doner or Shawarma kebab is ejected from the other end of the tubular member ready for mounting in position in a Doner or Shawarma kebab cooking machine.

FIG 1

Title: Improvements in or relating to forming Doner or Shawarma kebabs.

THIS INVENTION relates to improvements in or relating to forming Doner or Sharwarma kebabs. In particular, this invention relates to a machine and method for forming a Doner or Shawarma kebab ready for insertion in a Doner or Shawarma kebab cooking machine.

Conventionally, Doner kebabs or Shawarma are formed by hand and the formation is a laborious process which can take up to an hour for a single Doner or Shawarma kebab.

It is an object of the present invention to provide a machine and method for forming a Doner or Sharwarma kebab which facilitates the production thereof and, in particular, reduces the time required to produce the Doner or Shawarma kebab.

According to one aspect of the present invention, there is provided a machine for forming a Doner or Shawarma kebab, which machine comprises a tubular arrangement, a first pressing plate, receivable in one end of the tubular arrangement so as to be slidable at least partially therealong, a second pressing plate, removably mountable to the tubular arrangement to close the other end of the tube arrangement, one of the first and second pressing plates being arranged to engage support for a Doner or Shawarma kebab, means for moving the first plate axially inwardly of the tubular arrangement and means for actuating the moving means so as to cause meat on a support placed within the tubular arrangement, and engaged by said one of the first and second pressing plates to be pressed between the first and second pressing plates when the second pressing plate is mounted to the tubular arrangement to close the other end thereof and so as to cause a finished Doner or Shawarma kebab to be ejected from the tubular arrangement when the second pressing plate is disengaged from the tubular arrangement.

In one embodiment of the present invention the second pressing plate is mountable at the other end of the tubular arrangement so as to be slidable at least partially therealong.

The tubular arrangement may comprise two tubular members connected by a pipe of smaller diameter than the two tubular members, the first pressing plate being receivable in one of the tubular members and the second pressing plate being removably mountable to the other of the tubular members.

In an alternative embodiment of the present invention the machine comprises a tubular member, a first pressing plate receivable in one end of the tubular member so as to be slidable therealong, a second pressing plate removably mountable to the tubular member to close the other end of the tubular member, one of the first and second pressing plates being arranged to engage a support for a Doner or Shawarma kebab, means for moving the first pressing plate axially inwardly of the tubular member and means for actuating the moving means so as to cause meat on a support placed within the tubular member and engaged by the said one of the first and second pressing plates to be pressed between the first and second pressing plates when the second pressing plate is mounted to the tubular member to close the other end thereof and so as to cause a finished Doner or Shawarma kebab to be ejected from the tubular member when the second pressing plate is disengaged from the tubular member.

Preferably the tubular member has two or more engaging members extending transversely and axially from the other end of the tubular member, the engaging members being spaced apart around the periphery of the tubular member and being formed with respective apertures, the second pressing plate being provided with a pair of projections corresponding to each of the said engaging members so that when the second pressing plate is mounted to the other end of the tubular member, each pair of projections on the second pressing plate receives therebetween a corresponding engaging member and the second pressing plate can be secured to the other end of the tubular member by passing a respective locking pin through apertures in the pressing plate projections aligned with the aperture in the respective engaging member.

The moving means may comprise a hydraulic jack and may be electrically actuated or actuated by a compressor.

Preferably the first pressing plate is provided with a tubular extension for receiving an end of the actuating member.

Means may be provided on the base for engaging the tubular arrangement to secure the same to the base.

Preferably the tubular arrangement is provided adjacent one end thereof with two or more engaging members extending transversely of the one end of the tubular arrangement and spaced apart around the periphery thereof, each engaging member being formed with an aperture for receiving a respective locking pin and the base being provided with a pair of spaced-apart projections corresponding to each engaging member each of the base projections being provided with an aperture so that when the tubular arrangement is mounted on the base with each engaging member received between the corresponding pair of base projections, a respective locking pin may be inserted through the aligned apertures to secure the tubular arrangement to the base.

In the alternative embodiment of the present invention it is further preferred that two or more elongate engaging members extend along the tubular members spaced-apart around the periphery thereof, one end of each engaging member being flush with the one end of the tubular member and the other end of each engaging member extending beyond the other end of the tubular member, each end of each engaging member being formed with a through-aperture, pairs of spaced-apart projections being provided on the base for each receiving therebetween the one end of a respective engaging member, each of the projections being formed with a respective through-aperture, and the second pressing plate is formed with pairs of spaced-apart projections for each receiving therebetween the other end of a respective engaging member, each projection being formed with a through-aperture, and a respective connecting pin is provided for each pair of projections to enable the tubular member to be secured to the base and the second and pressing plate to be secured to the other end of the tubular member.

According to a second aspect of the present invention there is provided a method of forming Doner or Shawarma kebabs, which method comprises inserting a first pressing plate into one end of a tubular arrangement, the first pressing plate being slidable partially therealong, filling the tubular assembly at least partially with minced or sliced meat, mounting a second pressing plate to the tubular assembly to close the other end thereof, mounting a Doner or Shawarma kebab support on either the first or second pressing plates, actuating moving means to move the first pressing plate axially inward of the tubular assembly towards the second pressing plate to press the meat on the support between the first and second pressing plates to form a Doner or Shawarma kebab and disengaging the second pressing plate to allow the formed Doner or Shawarma kebab to be removed from the tubular assembly.

Preferably the second pressing plate is mounted to the other end of the tubular arrangement so as to be slidable at least partially therealong.

In a further embodiment of the present invention the method comprises mounting a Doner or Shawarma kebab support on a first pressing plate movably received in one end of a tubular member, filling the tubular member with minced or sliced meat, mounting a second pressing plate to the tubular member to close the other end thereof, actuating moving means to move the first pressing plate axially inwardly of the tubular member toward the second pressing plate to press the meat on the support between the first and second pressing plates to form a Doner or Shawarma kebab, and removing the second pressing plate to allow the formed Doner or Shawarma kebab to be ejected from the other end of the tubular member by the moving means.

The moving means may be a hydraulic jack which is primed by using a hand pumping lever and actuation of the moving means is controlled by means of a control lever.

Alternatively, the moving means comprises an electric motor driving a lifting jack and the removing means is controlled by a control lever.

In a further alternative embodiment the moving means is actuated by an air compressor

For a better understanding of the present invention, and to show how the same may be put into effect, reference will now be made, by way of example, to the accompanying drawings, in which;

FIGURE 1 is an exploded perspective view of a machine in accordance with the present invention;

FIGURE 2 is a part-sectional view of a machine in accordance with the present invention taken along the lines X-X in Figure 1;

FIGURE 2a is a sectional view, similar to Figure 2 but showing only the base of the machine to illustrate an alternative moving means for the machine;

FIGURE 3 is a part-sectional view taken along the line Y-Y of Figure 1;

FIGURES 4a, 4b, 4c and 4d illustrate in sequence the steps involved in preparing a Doner or Shawarma kebab using the machine shown in Figures 1 to 3; and

FIGURE 5 shows, schematically, an alternative embodiment of the present invention.

Referring now to the drawings, a machine for forming a Doner or Shawarma kebab comprises a tubular cylindrical member 1 of substantially circular cross-section, a first pressing plate 2 receivable in one end 1a of the tubular member so as to be slidable axially therealong and a second pressing plate 3 removably mountable to the other end 1b of the tubular member.

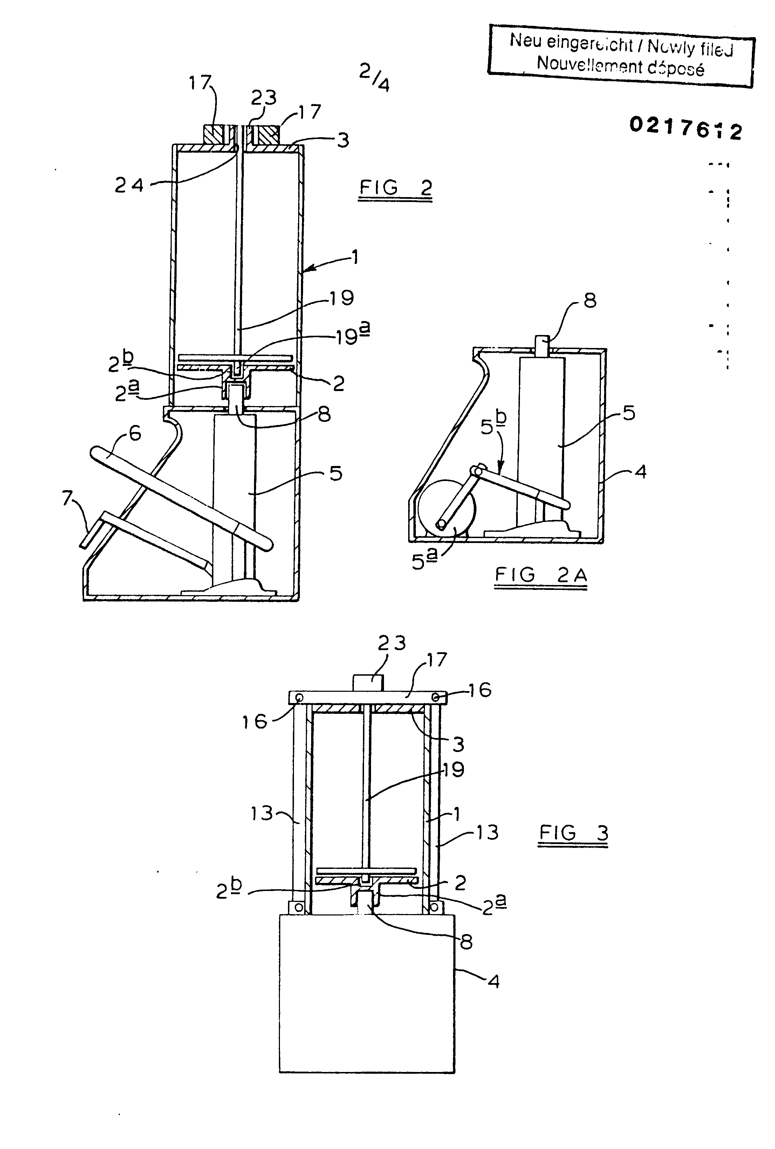

The machine also comprises a base 4 containing a drive or moving means for the machine. As shown in Figure 2, the moving means comprises a hydraulic jack arrangement 5, the jack being primed by means of a hand pump lever 6 and actuation of the jack being controlled by a control lever 7 for opening and closing the valve of the jack. Of course, the moving means need not comprise a hydraulic jack but could be a manually or motor-operated jack. Figure 2a illustrates schematically a version of the machine in which the jack is operated by an electric motor 5a and eccentric cam and lever arrangement 5b. Alternatively, the jack may be operated by an air compressor.

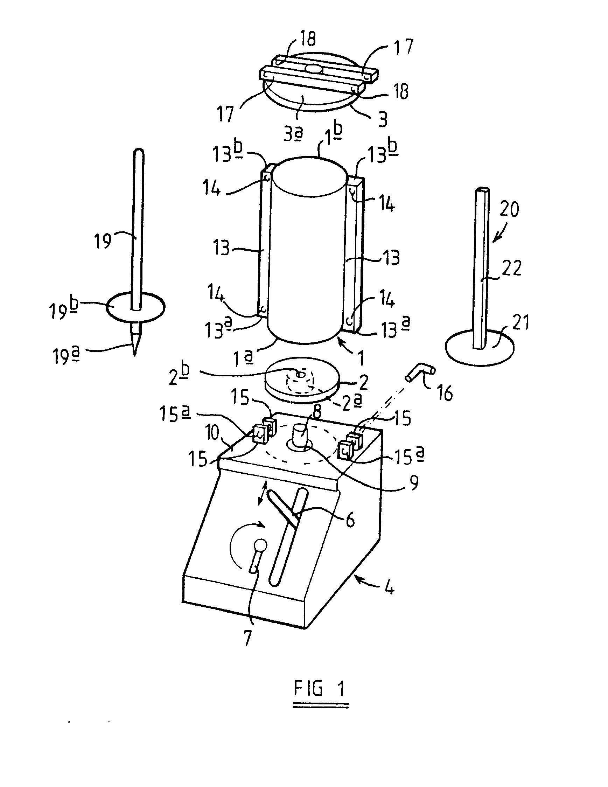

Referring again to Figure 1, an actuating member or piston 8 of the moving means extends from a centrally positioned aperture 9 in a top face 10 of the base of the machine. The first pressing plate 2 is provided with a tubular cylindrical projection 2a which extends axially therefrom for receiving the free end of the piston 8 to mount the first pressing plate on the piston 8. Two diammetrically - opposed square cross-section engaging members 13 extend along the outer periphery of the tubular member substantially parallel to the axis thereof. One end 13a of each engaging member 13 is flush with the one end of the tubular member 1 while the other end 13b of each engaging member 13 projects beyond the other end of the tubular member. Each of the engaging members 13 is formed with a respective through aperture 14 extending substantially parallel to a tangent to the cylindrical outer surface of the tubular member 1.

Two pairs of projections 15 each having a through aperture 15a are mounted spaced - apart on the top face 10 of the base so that each pair can receive therebetween the one end 13a of a respective engaging member 13. Thus, when the tubular member 1 is mounted on the base so that the one ends 13a of the engaging members 13 are received between the pairs of projections 15, a respective right-angle locking pin 16 can be inserted through the aligned apertures 14, 15a to secure the tubular member to the base. Of course, any suitable form of means for securing the tubular member to the base could be used.

An upper surface 3a of the second pressing plate 3 carries two elongate substantially square cross-section pressing plate engaging members 17 disposed spaced - apart on either side of a diameter of the circular cross-section second pressing plate. Each end of each pressing plate engaging member 17 extends beyond the periphery of the pressing plate and is formed with a respective through aperture 18 extending substantially parallel to a tangent to the periphery of the pressing plate. Thus, when the pressing plate is mounted to the other end of the tubular member 1, the other end 13b of each engaging member 13 is received between a respective pair of ends of the pressing plate engaging members 17 so that the apertures 18 in the ends of each pair of pressing plate engaging members 17 are aligned with the aperture 14 in the other end 13b of the associated engaging member. A respective right angle locking pin 16 is then passed through the aligned apertures to lock the second pressing plate in position on the other end of the tubular member.

The first pressing plate 2 is provided with an axial recess 2b for receiving a projection 19a of a meat skewer 19 carrying a circular plate 19b for supporting a Doner kebab. As an alternative to the meat skewer, a meat sleeve 20 comprising a circular supporting plate 21 having a supporting member 22 extending axially therefrom can be used to support the Doner kebab.

As shown in Figures 1,2 and 3, the second pressing plate may be provided with a central knob 23 for facilitating the removal thereof from the tubular member 1. Preferably, the second pressing plate 3 has a central through aperture 24 and the knob 23 is hollow to allow an end of a meat skewer to project therethrough.

Although in the arrangement described above, two engaging members and 13 corresponding projections 15 and the pressing plate engaging members 17 are provided, three or more engaging members and the appropriate number of projections 15 and pressing plate engaging members could be provided.

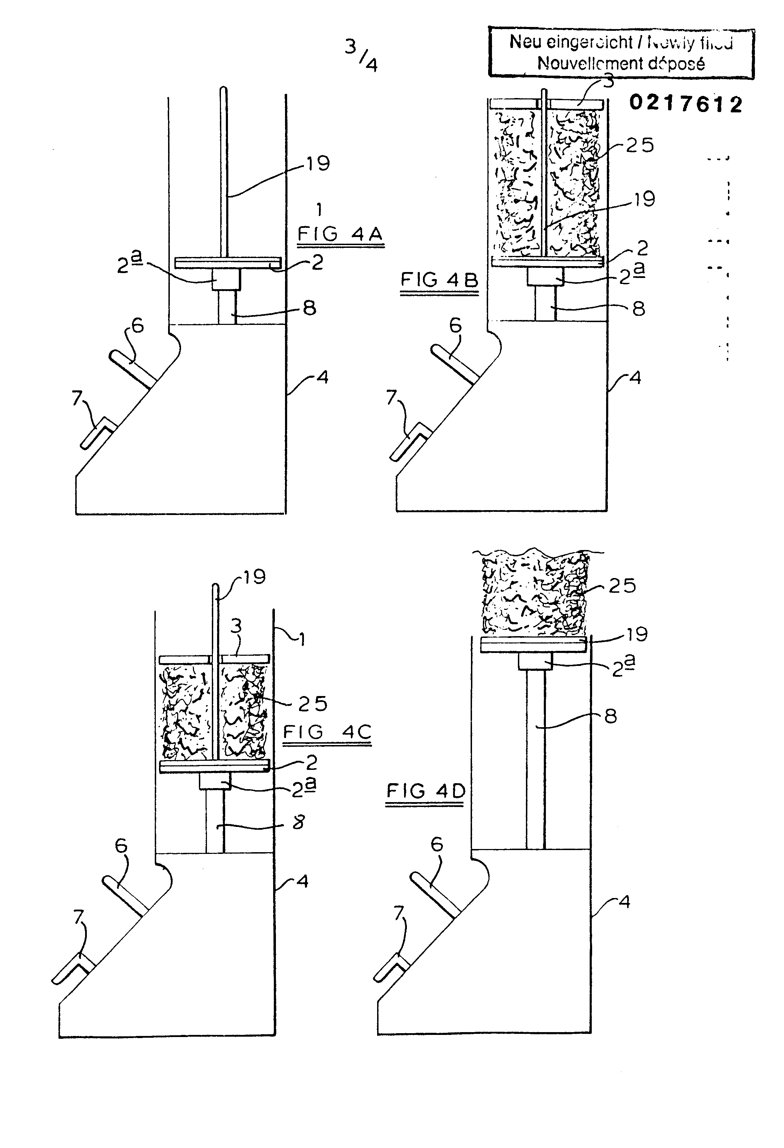

Figures 4a to 4d illustrate schematically the operation of the machine to form a Doner or Shawarma kebab. Where the machine is operated by means of a hydraulic jack, the pump should first be primed by means of the hand pump lever 6. Next, the first pressing plate 2 is mounted to the base so that the end of the piston 8 is received within the cylindrical projection 2a of the first pressing plate 2. The tubular member 1 is then mounted to the base so that the first pressing plate is slidably received therein and the one end 13a of each engaging member 13 is received between the respective pair of projections 15. A respective right - angle pin 16 is then inserted through the aligned apertures 14 and 15a to secure the tubular member 1 to the base.

A meat skewer 19 (or sleeve) is then inserted into the tubular member or mould 1 so that the meat skewer is mounted on the first pressing plate 2 with the projection 19a thereof extending into the recess 26. The tubular member 1 or mould is then filled with sliced or minced meat 25 which is then preferably tamped down by hand. The second or top pressing plate 3 is then mounted to the other end of the tubular member so that the other ends 13b of the engaging members 13 are received between respective ends of the pressing plate engaging members 17. A respective right angle pin 16 is then inserted through each of the sets of aligned apertures 14 and 18 to secure the second pressing plate 3 to the tubular member. The hydraulic pump or jack 5 is then operated by means of the control lever 7 to move the first pressing plate 2 upwardly until the meat 25 in the mould is well pressed  at which time air and meat should pass through the top or second pressing plate. Conveniently, the meat is pressed so that the volume thereof is reduced by one sixth of the meat packed in the mould 1. The control lever 7 should then be actuated to switch off the hydraulic pump and the formed Doner or Shawarma kebab allowed to settle for about 30 seconds.

In order to extract a formed Doner or Shawarma kebab from the machine, the top or second pressing plate 3 is first removed and the hydraulic pump actuated by means of the control levers 7 to raise the first pressing plate upwardly until the first pressing plate is visible or level with the other end of the tubular member 1. The Doner or Shawarma kebab can then be removed and inserted into a Doner or Shawarma kebab cooking machine.

In order to assist in the pressing of the meat, a constriction may be provided inside the other end 1b of the tubular member 1. In particular, a semi-circular or elliptical lip maybe provided inside the other end 1b of the tubular member.

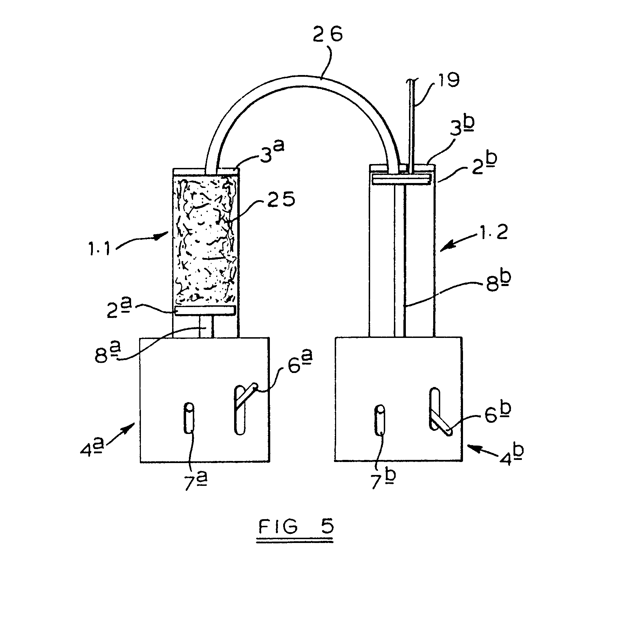

In tests on the machine shown in Figures 1 to 4, it was discovered that ,if it was required to form a kebab with more than approximately 35lbs of meat, the machine shown in Figures 1 to 4 was insufficient to compress the meat adequately to form a kebab. Accordingly, it was found that, by linking two machines by means of an pipe of smaller diameter than the tubular member 1, as shown in Figure 5, sufficient compression could be obtained to form a kebab made of meat weighing in total more than 35lbs.

In Figure 5 two machines comprising respective bases 4a, 4b and respective tubular members 1.1, 1.2 are linked by means of a hydraulic pipe 26 to form a tubular arrangment comprising the two tubular members 1.1, 1.2 and the pipe 26. In this tubular arrangement the first pressing plate 2a of the first machine which machine comprises the first base 4a and the first tubular member 1.1, is the first pressing plate of the tubular arrangement, and the first pressing plate of the second machine, which machine comprises the second tubular member 1.2 and the second base 4b, forms the second pressing plate of the tubular arrangement. The second pressing plates 3a, 3b of the two machines merely form covers to the two tubular members 1.1, 1.2. The first cover plate 3a has a single aperture to which is connected one end of the pipe 26, and the second cover plate 3b has two apertures, one of which is connected to the hydraulic pipe 26 and the other of which accommodates a meat skewer 19 attached to the second pressing plate 2b of the tubular arrangement.

When the arrangement shown in Figure 5 is to be used, the first machine, comprising first tubular member 1.1 and first base 4a is positioned so that the first pressing plate 2a of the tubular arrangement is at its lowest position. The first tubular member 1.1 is then filled with meat 25 and the cover 3a is mounted on the upper end of the first tubular member 1.1 thus connecting the first tubular member 1.1 to the pipe 26. The second machine, comprising second tubular member 1.2 and second base 4b, is then positioned alongside the first machine with the second pressing plate 2b positioned at its uppermost position. The meat skewer 19 is then affixed to the second pressing plate 2b and the cover 3b is mounted on the second tubular member 1.2, with the meat skewer 19 extending through the appropriate aperture in the cover 3b, so as to connect the pipe 26, and thus the first tubular member 1.1, to the second tubular member 1.2.

To operate this arrangement the first machine is actuated so as to move a first piston 8a upwardly, thus pushing the first pressing plate 2a so as to compress the meat 25 and to force it along pipe 26. When the meat 25 enters the second tubular member 1.2, it will force the second pressing plate 2b downwardly, towards the base 4b, against the pressure of the hydraulic pump or jack in base 4b, which pressure forces the piston 8b and the second pressing plate 2b upwardly, thus causing the meat to be compressed even further. The pressure of the meat entering the second tubular member 1.2 will force the second pressing plate 2b, together with the skewer 19, downwardly and will cause the meat to be packed around the skewer 19. When the first pressing plate 2a has reached the top of the first tubular member 1.1, the two machines are deactuated. The cover 3b may then be removed from the second tubular member 1.2 and the formed Doner or Shawarma kebab, formed around the meat skewer 19 may then be removed from the second tubular member 1.2 by actuating the second piston 8b to push the second pressing plate 2b, and thus the skewer 19, upwardly out of the second tubular member 1.2.

Alternatively, the second tubular member may be removed from the base 4b and the formed kebab may be removed from the second pressing plate 2b.

The features disclosed in the aforegoing ddescription, in the following claims and/or in the accompanying drawings may, both separately and in any combination thereof, be material for realising the invention in diverse forms thereof.

CLAIMS

1.    A machine for forming a Doner or Shawarma kebab, which machine comprises a tubular arrangement, a first pressing plate (2a), receivable in one end of the tubular arrangement so as to be slidable at least partially therealong, a second pressing plate (2b), removably mountable to the tubular arrangement to close the other end of the tubular arrangement, one of the first and second pressing plates (2a, 2b) being arranged to engage a support (19) for a Doner or Shawarma kebab, means (8a) for moving the first plate axially inwardly of the tubular arrangement and means (5) for actuating the moving means (8) so as to cause meat on a support (19), placed within the tubular arrangement and engaged by said one of the first and second pressing plates (2a, 2b), to be pressed between the first and second pressing plates (2a, 2b), when the second pressing plate (2b) is mounted to the tubular arrangement to close the other end thereof and so as to cause a finished Doner or Shawarma kebab to be ejected from the tubular arrangement when the second pressing plate (2b) is disengaged from the tubular arrangement.

2.    A machine according to Claim 1, wherein the second pressing plate (2b) is mountable at the other end of the tubular arrangement so as to be slidable at least partially therealong.

3.    A machine according to Claim 1 or 2, wherein the tubular arrangement comprises two tubular members (1.1, 1.2) connected by a pipe (26) of smaller diameter than the two tubular members (1.1, 1.2), the first pressing plate (2a) being receivable in one of the tubular members (1.1) and the second pressing plate (2b) being removably mountable to the other of the tubular members (1.2).

4.    A machine according to Claim 1, which machine comprises a tubular member (1), a first pressing plate (2) receivable in one end (1a) of the tubular member (1) so as to be slidable therealong, a second pressing plate (3) removably mountable to the tubular member (1) to close the other end of the tubular member (1b), one of the first and second pressing plates (2, 3) being arranged to engage a support (19) for a Doner or Shawarma kebab, means (8) for moving the first pressing plate (2) axially inwardly of the tubular member (1) and means (5) for actuating the moving means (8) so as to cause meat on a support (19) placed within the tubular member (1) and engaged by the said one of the first and second pressing plates (2, 3) to be pressed between the first and second pressing plates (2, 3) when the second pressing plate (3) is mounted to the tubular member (1) to close the other end (1b) thereof and so as to cause a finished Doner or Shawarma kebab to be ejected from the tubular member (1) when the second pressing plate (3) is disengaged from the tubular member (1).

5. A machine according to any of the preceding claims, wherein the moving means (8) is mounted in a base (4) for supporting at least part of the tubular arrangement in an upright position, an actuating member of the moving means (8) extending from the base (4) for engaging the first pressing plate (2) to move the same when the moving means (8) is actuated by the actuating means (5).

6. A machine according to any preceding claim, wherein the first pressing plate (2) is formed with an aperture or recess for receiving part of a Doner or Shawarma kebab support (19) in the form of a meat skewer.

7. A machine according to any preceding claim in combination with a plurality of supports (19) in the form of meat skewers or meat sleeves for Doner or Shawarma kebabs.

8. A method of forming Doner or Shawarma kebabs, which method comprises inserting a first pressing plate (2a) into one end of a tubular arrangement, the first pressing plate (2a) being slidable partially therealong, filling the tubular assembly at least partially with minced or sliced meat (25), mounting a second pressing plate (2b) to the tubular assembly to close the other end thereof, mounting a Doner or Shawarma kebab support (19) on either the first or second pressing plates (2a, 2b), actuating moving means (8) to move the first pressing plate (2a) axially inward of the tubular assembly towards the second pressing plate (2b) to press the meat (25) on the support (19) between the first and second pressing plates (2a, 2b) to form a Doner or Shawarma kebab and disengaging the second pressing plate (2b) to allow the formed Doner or Shawarma kebab to be removed from the tubular assembly.

9. A method as claimed in Claim 8, wherein the second pressing plate (2b) is subjected to a second force, acting in a direction substantially opposite to the direction of a first force exerted by the meat (25) being pressed by the first pressing plate (2a), said second force being less than the first force exerted by the meat (25) being pressed by the first pressing plate (2a).

10. A method according to Claim 8, which method comprises mounting a Doner or Shawarma kebab support (19) on a first pressing plate (2) movably received in one end (1a) of a tubular member (1), filling the tubular member (1) with minced or sliced meat (25), mounting a second pressing plate (3) to the tubular member (1) to close the other end (1b) thereof, actuating moving means (8) to move the first pressing plate (2) axially inwardly of the tubular member (1) toward the second pressing plate (3) to press the meat (25) on the support (19) between the first and second pressing plates (2, 3) to form a Doner or Shawarma kebab, and removing the second pressing plate (3) to allow the formed Doner or Shawarma kebab to be ejected from the other end (1b) of the tubular member (1) by the moving means (8).

11. A method according to any of Claims 8, 9 or 10, which includes pressing the meat (25) down within the tubular arrangement before moving the first pressing plate (2a).

12. A method according to any of Claims 8 to 11, which comprises mounting the first pressing plate (2a) onto an actuating member of the moving means (8a) extending from a base (4a) within which the moving means (8) is mounted, positioning the tubular arrangement on the base (4a) so that the first pressing plate (2a) is slidable therein, securing the tubular arrangement to the base (4a) and mounting a Doner or Shawarma kebab support (19) on the first pressing plate (2a) within the tubular arrangement before filling the tubular arrangement with meat (25).

13. A method according to any one of Claims 8 to 11, which comprises mounting the first pressing plate (2a) onto an actuating member of the moving means (8a) extending from a base (4a) within which the moving means (8) is mounted, positioning the tubular arrangement on the base (4a) so that the first pressing plate (2a) is slidable therein, securing the tubular arrangement to the base (4a) and mounting a Doner or Shawarma kebab support (19) on the second pressing plate (2b) within the tubular arrangement before filling the tubular arrangement with meat (25)

FIG 1

0217612

FIG 2

FIG 2A

FIG 3

0217612

FIG 4A

FIG 4B

FIG 4C

FIG 4D

FIG 5

European Patent
Office

**EUROPEAN SEARCH REPORT**

**0217612**

Application number

EP 86 30 7246

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-2 625 876 (HAMMERBERG)  * Whole document * | 1,4-8, 10,12, 13 | A 22 C 7/00 |
| A | CH-A- 399 688 (KESSLER)  * Whole document * | 1,4,5, 10,13 | |
| A | GB-A-1 438 756 (A.B.R. FOOD MACHINERY CO.)  * Whole document * | 2,3,9, 11 | |
| A | US-A-4 294 865 (CORONCOS) | | |
| A | FR-A-2 493 104 (KAUFLER) | | TECHNICAL FIELDS SEARCHED (Int. Cl 4) |
| | ----- | | A 22 C |

The present search report has been drawn up for all claims

| Place of search | Date of completion of the search | Examiner |
|---|---|---|
| THE HAGUE | 26-11-1986 | DE LAMEILLIEURE D. |